# FASCICULE DE BREVET EUROPEEN

(11) **EP 3 772 163 B1**
(45) Date de publication et mention de la délivrance du brevet: **04.08.2021**
(21) Numéro de dépôt: 20187475.7
(22) Date de dépôt: 23.07.2020
(51) Int. Cl.: H02M 1/08, H02M 1/42, H02M 3/337, H02J 50/10, H02M 3/335, H02M 5/257, H02M 1/00

(54) **CONVERTISSEUR DE PUISSANCE**
LEISTUNGSWANDLER
POWER CONVERTER

(30) Priorité: 30.07.2019 FR 1908704
(43) Date de publication de la demande: 03.02.2021
(73) Titulaire: Commissariat à l'Energie Atomique et aux Energies Alternatives, 75015 Paris (FR)
(72) Inventeur: BERGOGNE, Dominique, 38054 GRENOBLE CEDEX 9 (FR); PERICHON, Pierre, 38054 GRENOBLE CEDEX 9 (FR); STERNA, Léo, 38054 GRENOBLE CEDEX 9 (FR)
(74) Mandataire: Cabinet Beaumont

(56) Documents cités:
- US-A1- 2019 097 544
- US-B1- 10 122 367
- POSHTKOUHI SHAHAB ET AL: "PLL based bridge synchronization as an alternative to digital isolators for Dual Active Bridge DC-DC converters", 2015 IEEE APPLIED POWER ELECTRONICS CONFERENCE AND EXPOSITION (APEC), IEEE, 15 mars 2015 (2015-03-15), pages 9-14, XP032774923, DOI: 10.1109/APEC.2015.7104325

## Description

### Domaine technique

La présente description concerne le domaine des convertisseurs de puissance, et vise plus particulièrement le domaine des convertisseurs dits à commande de phase.

### Technique antérieure

Un convertisseur de puissance à commande de phase comprend typiquement un étage primaire modulant la puissance d'entrée à une fréquence relativement élevée appelée fréquence de découpage, suivi d'un étage d'isolation adapté à transmettre la puissance modulée par l'étage primaire, suivi d'un étage secondaire démodulant la puissance transmise par l'étage d'isolation et fournissant la puissance de sortie du convertisseur. Chacun des étages primaire et secondaire comprend un ou plusieurs interrupteurs commandés en commutation, aussi appelés interrupteurs de découpage. Le contrôle du transfert de puissance entre l'entrée et la sortie du convertisseur est réalisé en jouant sur le déphasage entre la commande du ou des interrupteurs de l'étage primaire et la commande du ou des interrupteurs de l'étage secondaire, les deux étages étant commandés à la même fréquence. Des exemples de convertisseurs de puissance à commande de phase sont notamment décrits dans les demandes de brevet FR3061817 et FR3061818 précédemment déposées par le demandeur. Les documents US10122367 et US2019/067544 et l'article intitulé "PLL based bridge synchronization as an alternative to digital isolators for Dual Active Bridge DC-DC converters" de Poshtkouhi Shahab et al (XP032774923) décrivent d'autres exemples de convertisseurs de puissance à commande de phase.

De façon classique, un convertisseur à commande de phase comprend un circuit de contrôle commun aux étages primaire et secondaire. Du fait de l'isolation entre les étages primaire et secondaire, le circuit de contrôle commun est relativement complexe et coûteux. En particulier, il faut généralement prévoir des mesures de tension et/ou courant isolées, et des composants de communication isolés entre l'étage primaire et l'étage secondaire, par exemple des opto-coupleurs ou des isolateurs RF. Ces liaisons de l'étage primaire et de l'étage secondaire vers un même circuit de contrôle commun sont particulièrement problématiques lorsque les étages primaire et secondaire sont physiquement séparés l'un de l'autre, par exemple dans le cas d'un système de transmission d'énergie sans fil.

Il serait souhaitable de pallier tout ou partie des inconvénients des convertisseurs à commande de phase connus. Résumé de l'invention

Pour cela, un mode de réalisation prévoit un convertisseur de puissance comportant les caractéristiques de la revendication indépendante.

Selon un mode de réalisation, le circuit de contrôle de l'étage secondaire est en outre configuré pour, à l'issue de la phase de synchronisation, synchroniser le deuxième signal de commande du deuxième pont en H par rapport au troisième signal, de façon à synchroniser la commande du deuxième pont en H sur celle du premier pont en H.

Selon un mode de réalisation, le circuit de contrôle de l'étage secondaire est configuré pour réitérer la phase de synchronisation de façon périodique.

Selon un mode de réalisation, le circuit de contrôle de l'étage secondaire est en outre configuré pour, lors d'une phase de sélection de plage de fonctionnement, déterminer, à partir d'une mesure d'un courant et/ou d'une tension dans l'étage secondaire, dans quelle plage de fonctionnement se situe un déphasage ϕ entre le premier signal de commande du premier pont en H et le deuxième signal de commande du deuxième pont en H.

Selon un mode de réalisation, le circuit de contrôle de l'étage secondaire est en outre configuré pour, lors de la phase de sélection de plage de fonctionnement, modifier la phase du deuxième signal de commande du deuxième pont en H de façon à placer le déphasage ϕ dans une plage de fonctionnement souhaitée.

Selon un mode de réalisation, le circuit de contrôle de l'étage primaire est configuré pour mesurer un signal alternatif d'entrée du convertisseur, et adapter en conséquence un rapport cyclique entre des signaux de commande de premier et deuxième bras du premier pont en H de façon à assurer une absorption sinusoïdale du courant d'entrée du convertisseur.

Selon un mode de réalisation, le circuit de contrôle de l'étage secondaire est configuré pour, à partir d'une mesure d'un courant ou d'une tension dans l'étage secondaire, déterminer l'évolution d'un signal alternatif d'entrée du convertisseur, et adapter en conséquence un rapport cyclique entre des signaux de commande de premier et deuxième bras du deuxième pont en H de façon à assurer une absorption sinusoïdale du courant d'entrée du convertisseur.

Selon un mode de réalisation, le circuit de contrôle de l'étage primaire et le circuit de contrôle de l'étage secondaire sont adaptés à commander le premier interrupteur et le deuxième interrupteur en commutation à une fréquence comprise entre 10 kHz et 10 MHz.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un convertisseur de puissance à commande de phase selon un mode de réalisation ;
la figure 2 est un schéma électrique d'une variante de réalisation du convertisseur de la figure 1 ;
la figure 3 est un diagramme illustrant le fonctionnement du convertisseur de la figure 1 ou 2 ;
la figure 4 est un autre diagramme illustrant le fonctionnement du convertisseur de la figure 1 ou 2 ;
la figure 5 représente, sous forme de blocs, un exemple d'un procédé de sélection d'une plage de fonctionnement d'un convertisseur à commande de phase ;
la figure 6 représente, sous forme de blocs, un exemple d'un procédé de synchronisation d'un convertisseur à commande de phase selon un mode de réalisation ;
la figure 7 est un diagramme illustrant un exemple de fonctionnement du procédé de synchronisation de la figure 6 ; et
la figure 8 est un schéma bloc simplifié représentant un exemple d'un convertisseur à commande de phase selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications qui peuvent être faites des convertisseurs de puissance décrits n'ont pas été détaillées, les modes de réalisation décrits étant compatibles avec les applications usuelles de convertisseurs de puissance. De plus, les circuits de commande des interrupteurs des étages primaire et secondaire des convertisseurs décrits ne sont pas détaillés, la réalisation de ces circuits de commande étant à la portée de l'homme du métier à partir des indications fonctionnelles de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

Selon un aspect des modes de réalisation décrits, on prévoit de réaliser un convertisseur de puissance à commande de phase comprenant un premier circuit de contrôle pour commander l'étage primaire, et un deuxième circuit de contrôle pour commander l'étage secondaire, les premier et deuxième circuits de contrôle étant entièrement séparés l'un de l'autre, sans communication directe entre les deux circuits.

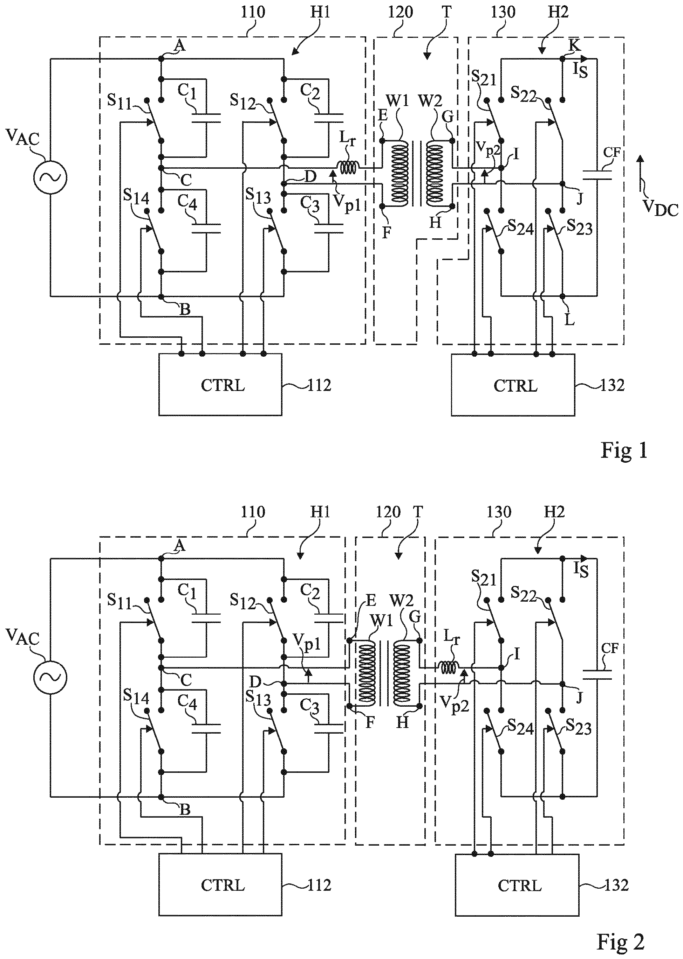

La figure 1 est un schéma électrique d'un exemple d'un convertisseur de puissance à commande de phase selon un mode de réalisation. On considère dans cet exemple un convertisseur alternatif-continu (AC/DC).

Le convertisseur de la figure 1 comprend un étage primaire 110, suivi d'un étage d'isolation 120, suivi d'un étage secondaire 130.

Dans cet exemple, l'étage primaire 110 comprend un premier pont en H commandé H1, ou pont primaire, et une inductance série Lᵣ, l'étage d'isolation 120 comprend un transformateur T, et l'étage secondaire 130 comprend un deuxième pont en H commandé H2, ou pont secondaire.

Le pont H1 est constitué de quatre interrupteurs commandés S₁₁, S₁₂, S₁₃ et S₁₄, par exemple identiques aux dispersions de fabrication près, comportant chacun deux noeuds de conduction principaux et au moins un noeud de commande. Les interrupteurs S₁₁ et S₁₄ sont reliés en série, par leurs noeuds de conduction, entre des noeuds d'entrée A et B du pont. Les interrupteurs S₁₂ et S₁₃ sont reliés en série, par leurs noeuds de conduction, entre les noeuds A et B, en parallèle de la branche comprenant les interrupteurs S₁₁ et S₁₄. Le point milieu C entre les interrupteurs S₁₁ et S₁₄ définit un premier noeud de sortie du pont, et le point milieu D entre les interrupteurs S₁₂ et S₁₃ définit un deuxième noeud de sortie du pont. Plus particulièrement, dans l'exemple représenté, l'interrupteur S₁₁ a un premier noeud de conduction connecté au noeud A et un deuxième noeud de conduction connecté au noeud C, l'interrupteur S₁₄ a un premier noeud de conduction connecté au noeud C et un deuxième noeud de conduction connecté au noeud B, l'interrupteur S₁₂ a un premier noeud de conduction connecté au noeud A et un deuxième noeud de conduction connecté au noeud D, et l'interrupteur S₁₃ a un premier noeud de conduction connecté au noeud D et un deuxième noeud de conduction connecté au noeud B. Dans cet exemple, les interrupteurs S₁₁, S₁₂, S₁₃ et S₁₄ sont bidirectionnels en courant et en tension.

Les noeuds d'entrée A et B du pont H1 reçoivent directement, c'est-à-dire sans étage intermédiaire de redressement à diodes, la tension alternative d'entrée V_{AC} du convertisseur, par exemple une tension sinusoïdale de fréquence de l'ordre de 50 ou 60 Hz, par exemple la tension secteur.

Dans cet exemple, l'étage primaire 110 comprend en outre quatre condensateurs C₁, C₂, C₃, C₄, par exemple identiques aux dispersions de fabrication près, reliés respectivement en parallèles des interrupteurs S₁₁, S₁₂, S₁₃, S₁₄ du pont H1. Plus particulièrement, chaque condensateur Cᵢ, avec i entier allant de 1 à 4, a ses électrodes connectées respectivement aux noeuds de conduction de l'interrupteur S₁ᵢ de même indice i. A titre de variante, les condensateurs C₁, C₂, C₃, C₄ peuvent être omis, les capacités C₁, C₂, C₃, C₄ étant alors constituées uniquement par les capacités parasites des interrupteurs S₁₁, S₁₂, S₁₃, S₁₄.

Le transformateur T comprend un enroulement primaire W1 et un enroulement secondaire W2 couplés magnétiquement.

Les extrémités E et F de l'enroulement primaire W1 sont reliées respectivement aux noeuds C et D de sortie du pont H1. Plus particulièrement, dans l'exemple représenté, l'extrémité E de l'enroulement primaire W1 est reliée au noeud C par l'intermédiaire de l'inductance Lᵣ, et l'extrémité F de l'enroulement primaire W1 est connectée au noeud D. Dans l'exemple représenté, l'inductance Lᵣ a une première extrémité connectée au noeud E et une deuxième extrémité connectée au noeud C. L'inductance Lᵣ peut être un composant inductif spécifiquement connecté à l'enroulement primaire W1, ou être constituée uniquement par l'inductance de fuite du transformateur.

Le pont H2 est constitué de quatre interrupteurs commandés S₂₁, S₂₂, S₂₃ et S₂₄, par exemple identiques aux dispersions de fabrication près, comportant chacun deux noeuds de conduction principaux et au moins un noeud de commande. Les interrupteurs S₂₁, S₂₂, S₂₃ et S₂₄ sont par exemple des interrupteurs quasi-bidirectionnels, c'est-à-dire adaptés à laisser circuler du courant dans les deux sens, mais ne permettant un contrôle du courant que dans un sens, c'est-à-dire ne pouvant être commandés à l'état bloqué que lorsqu'une tension d'une polarité déterminée est appliquée entre leurs noeuds de conduction (autrement dit des interrupteurs bidirectionnels en courant mais unidirectionnels en tension). Les interrupteurs S₂₁ et S₂₂ sont reliés en série, par leurs noeuds de conduction, entre des noeuds d'entrée I et J du pont. Les interrupteurs S₂₃ et S₂₄ sont reliés en série, par leurs noeuds de conduction, entre les noeuds I et J, en parallèle de la branche comprenant les interrupteurs S₁₂ et S₂₂. Le point milieu K entre les interrupteurs S₂₁ et S₂₂ définit un premier noeud de sortie du pont, et le point milieu L entre les interrupteurs S₂₃ et S₂₄ définit un deuxième noeud de sortie du pont. Plus particulièrement, dans l'exemple représenté, l'interrupteur S₂₁ a un premier noeud de conduction connecté au noeud I et un deuxième noeud de conduction connecté au noeud K, l'interrupteur S₂₂ a un premier noeud de conduction connecté au noeud J et un deuxième noeud de conduction connecté au noeud K, l'interrupteur S₂₄ a un premier noeud de conduction connecté au noeud I et un deuxième noeud de conduction connecté au noeud L, et l'interrupteur S₂₃ a un premier noeud de conduction connecté au noeud L et un deuxième noeud de conduction connecté au noeud J.

Les noeuds d'entrée I et J du pont H2 sont reliés respectivement aux extrémités G et H de l'enroulement secondaire W2 du transformateur T. Dans l'exemple représenté, l'extrémité G de l'enroulement W2 est connectée au noeud I et l'extrémité H de l'enroulement W2 est connectée au noeud J.

Dans l'exemple de la figure 1, le convertisseur comprend en outre un condensateur de filtrage de sortie CF, en sortie du pont H2. Dans l'exemple représenté, les électrodes du condensateur CF sont connectées respectivement aux noeuds K et L de sortie du pont H2, qui forment des noeuds de fourniture de la tension continue de sortie V_{DC} du convertisseur.

Dans l'exemple de la figure 1, le convertisseur comprend un circuit de contrôle 112 (CTRL) de l'étage primaire 110, adapté à commander les interrupteurs S₁₁, S₁₂, S₁₃, S₁₄ du pont primaire H1, et un circuit de contrôle 132 (CTRL) de l'étage secondaire 130, adapté à commander les interrupteurs S₂₁, S₂₂, S₂₃, S₂₄ du pont secondaire H2.

Les circuits de contrôle 112 et 132 sont entièrement séparés l'un de l'autre. Autrement dit, les circuits de contrôle 112 et 132 sont reliés l'un à l'autre uniquement par l'intermédiaire de l'étage d'isolation 120, constitué dans cet exemple par le transformateur T.

Bien que non détaillé sur la figure, le circuit de contrôle 112 peut comprendre des circuits de mesure de tensions et/ou de courants au sein de l'étage primaire, et des circuits adaptés à traiter les données fournies par les circuits de mesure et à générer en conséquence des signaux de commande des interrupteurs S₁₁, S₁₂, S₁₃, S₁₄ de l'étage primaire. De façon similaire, le circuit de contrôle 132 peut comprendre des circuits de mesure de tensions et/ou de courants au sein de l'étage secondaire, et des circuits adaptés à traiter les données fournies par les circuits de mesure et à générer en conséquence des signaux de commande des interrupteurs S₂₁, S₂₂, S₂₃, S₂₄ de l'étage secondaire.

La figure 2 est un schéma électrique illustrant une variante de réalisation du convertisseur de la figure 1.

Le convertisseur de la figure 2 diffère du convertisseur de la figure 1 principalement en ce que, dans le convertisseur de la figure 2, l'inductance Lᵣ placée en série du transformateur T se trouve dans l'étage secondaire 130 et non plus dans l'étage primaire 110. Plus particulièrement, dans l'exemple de la figure 2, l'extrémité G de l'enroulement secondaire W2 du transformateur T n'est pas directement connectée au noeud d'entrée I du pont secondaire H2, mais est reliée au noeud I par l'intermédiaire de l'inductance Lᵣ. Dans l'exemple représenté, l'inductance Lᵣ a une première extrémité connectée au noeud G et une deuxième extrémité connectée au noeud I. Côté étage primaire 110, l'extrémité E de l'enroulement primaire W1 peut être connectée au noeud de sortie C du pont primaire H1.

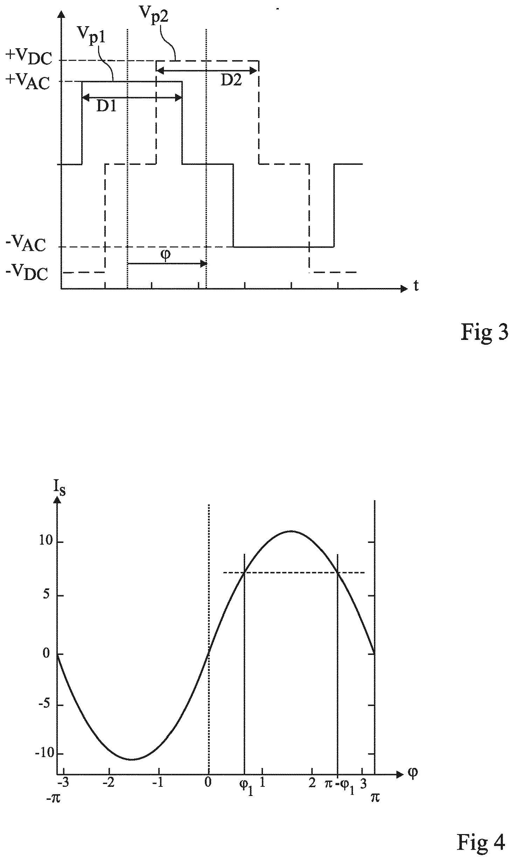

La figure 3 est un diagramme illustrant le fonctionnement du convertisseur de la figure 1 ou 2. La figure 3 représente plus particulièrement l'évolution, en fonction du temps t (en abscisse), de la tension Vₚ₁ (en trait plein) entre les noeuds de sortie C et D du pont primaire H1 du convertisseur, et de la tension Vₚ₂ (en trait interrompu) entre les noeuds d'entrée I et J du pont secondaire H2 du convertisseur. Dans cet exemple, les ponts primaire H1 et secondaire H2 sont commandés sensiblement à la même fréquence. On notera que dans l'exemple de la figure 3, du fait de la fréquence de commutation relativement élevée des interrupteurs des ponts H1 et H2, la tension d'entrée V_{AC} est considérée sensiblement constante pendant un cycle de commutation du pont H1 ou H2. A titre d'exemple, la fréquence de commutation des interrupteurs des ponts H1 et H2 est au moins dix fois et de préférence au moins vingt fois supérieure à la fréquence de la tension alternative d'entrée V_{AC} du convertisseur. A titre d'exemple, la fréquence de commutation des interrupteurs des ponts H1 et H2 est comprise entre 10 kHz et 10 MHz, par exemple entre 100 kHz et 1 MHz.

Dans l'exemple représenté, la commande du pont H1 est une commande à quatre phases. Plus particulièrement, chaque cycle de commande du pont H1 comporte les phases consécutives suivantes :
- une première phase pendant laquelle les interrupteurs S₁₁ et S₁₂ sont maintenus fermés et les interrupteurs S₁₃ et S₁₄ sont maintenus ouverts, ou pendant laquelle les interrupteurs S₁₃ et S₁₄ sont maintenus fermés et les interrupteurs S₁₁ et S₁₂ sont maintenus ouverts (Vₚ₁ = 0) ;
- une deuxième phase pendant laquelle les interrupteurs S₁₁ et S₁₃ sont maintenus fermés et les interrupteurs S₁₂ et S₁₄ sont maintenus ouverts (Vₚ₁ = +V_{AC}) ;
- une troisième phase pendant laquelle les interrupteurs S₁₁ et S₁₂ sont maintenus fermés et les interrupteurs S₁₃ et S₁₄ sont maintenus ouverts, ou pendant laquelle les interrupteurs S₁₃ et S₁₄ sont maintenus fermés et les interrupteurs S₁₁ et S₁₂ sont maintenus ouverts (Vₚ₁ = 0) ; et
- une quatrième phase pendant laquelle les interrupteurs S₁₂ et S₁₄ sont maintenus fermés et les interrupteurs S₁₁ et S₁₃ sont maintenus ouverts (Vₚ₁ = -V_{AC}) .

De façon similaire, dans cet exemple, la commande du pont H2 est une commande à quatre phases. Plus particulièrement, chaque cycle de commande du pont H2 comporte les phases consécutives suivantes :
- une première phase pendant laquelle les interrupteurs S₂₁ et S₂₂ sont maintenus fermés et les interrupteurs S₂₃ et S₂₄ sont maintenus ouverts, ou pendant laquelle les interrupteurs S₂₃ et S₂₄ sont maintenus fermés et les interrupteurs S₂₁ et S₂₂ sont maintenus ouverts (Vₚ₂ = 0) ;
- une deuxième phase pendant laquelle les interrupteurs S₂₁ et S₂₃ sont maintenus fermés et les interrupteurs S₂₂ et S₂₄ sont maintenus ouverts (Vₚ₂ = +V_{DC}) ;
- une troisième phase pendant laquelle les interrupteurs S₂₁ et S₂₂ sont maintenus fermés et les interrupteurs S₂₃ et S₂₄ sont maintenus ouverts, ou pendant laquelle les interrupteurs S₂₃ et S₂₄ sont maintenus fermés et les interrupteurs S₂₁ et S₂₂ sont maintenus ouverts (Vₚ₂ = 0) ; et
- une quatrième phase pendant laquelle les interrupteurs S₂₂ et S₂₄ sont maintenus fermés et les interrupteurs S₂₁ et S₂₃ sont maintenus ouverts (Vₚ₂ = -V_{DC}) .

La commutation des ponts H1 et H2 conduit à générer un courant alternatif haute fréquence au niveau du transformateur T, permettant un transfert de puissance de l'étage primaire vers l'étage secondaire ou de l'étage secondaire vers l'étage primaire. On notera que bien que, dans l'exemple illustré par la figure 3, la commande des ponts H1 et H2 soit une commande à quatre phases imposant des tensions alternatives Vₚ₁ et Vₚ₂ à trois niveaux, les modes de réalisation décrits ne se limitent pas à ce cas particulier. A titre de variante, la commande des ponts H1 et H2 peut être une commande à deux phases (correspondant respectivement aux deuxième et quatrième phases des exemples décrits ci-dessus), aussi appelée commande pleine onde, conduisant à générer des tensions alternatives Vₚ₁ et Vₚ₂ à deux niveaux. Les phases de l'exemple de la figure 3 dans lesquelles Vₚ₁ = 0 et Vₚ₂ = 0 sont alors omises.

Le transfert de puissance entre le primaire et le secondaire est affecté par trois variables de commande indépendantes, à savoir le déphasage entre les deux bras du pont primaire H1 définissant un rapport cyclique D1 sur la tension modulée Vₚ₁, le déphasage entre les deux bras du pont secondaire H2 définissant un rapport cyclique D2 sur la tension modulée Vₚ₂, et le déphasage ϕ entre la commande du pont primaire H1 et la commande du pont secondaire H2.

En pratique, la variable ϕ est particulièrement intéressante pour contrôler le transfert de puissance sans induire des contraintes trop importantes dans le convertisseur.

La figure 4 est un diagramme illustrant le courant de sortie Iₛ (en ordonnée) du convertisseur en fonction du déphasage ϕ (en abscisse), en supposant D1 et D2 fixes.

Le domaine de définition du déphasage ϕ est l'intervalle [-π ; π]. Comme cela apparaît sur la figure 4, le courant Iₛ est nul (pas de transfert de puissance) pour un déphasage ϕ=0, le courant Is est positif (transfert de puissance du primaire vers le secondaire) lorsque le déphasage ϕ est compris dans la plage [0 ; π], et le courant Iₛ est négatif (transfert de puissance du secondaire vers le primaire) lorsque le déphasage ϕ est compris dans la plage [-π ; 0]. Autrement dit, le signe du déphasage ϕ donne le sens du transfert de puissance.

L'évolution du courant Iₛ est symétrique par rapport à la valeur ϕ=0. De plus, comme cela apparaît sur la figure 2, dans la plage [0 ; π], l'évolution du courant Iₛ est symétrique par rapport à la valeur ϕ=π/2, et, dans la plage [-π ; 0], l'évolution du courant Iₛ est symétrique par rapport à la valeur ϕ=-π/2.

Dans l'exemple représenté, le courant Iₛ varie de façon sensiblement sinusoïdale lorsque le déphasage ϕ varie de -π à π.

Pour une même valeur de courant de sortie Iₛ souhaitée, il existe deux valeurs de déphasage ϕ1 et π-ϕ1, et donc deux points de fonctionnement du convertisseur, permettant d'obtenir le transfert de puissance visé. En pratique, l'un des deux points de fonctionnement est à privilégier car il permet de minimiser les pertes et d'obtenir de meilleures performances de conversion. Plus particulièrement, pour obtenir de bonnes performance de conversion, il convient de préférence de placer le déphasage ϕ dans la plage [0 ; π/2] pour un transfert de puissance de l'étage primaire vers l'étage secondaire, et dans la plage [-π/2 ; 0] pour un transfert de puissance de l'étage secondaire vers l'étage primaire.

Dans un convertisseur du type décrit en relation avec les figures 1 et 2, une difficulté est que, en l'absence de communication directe entre le circuit de contrôle 112 de l'étage primaire et le circuit de contrôle 132 de l'étage secondaire, au démarrage du convertisseur, ni le circuit de contrôle 112 ni le circuit de contrôle 132 ne sait dans quelle plage se situe le déphasage ϕ.

Le circuit de contrôle 132 de l'étage secondaire est adapté à mettre en oeuvre un procédé de sélection de plage de fonctionnement permettant d'identifier la plage de fonctionnement dans laquelle se situe le déphasage ϕ, et, si nécessaire, de modifier le déphasage ϕ en lui ajoutant un angle fixe prédéterminé de façon à replacer le déphasage ϕ dans la plage de fonctionnement optimale pour le fonctionnement du convertisseur.

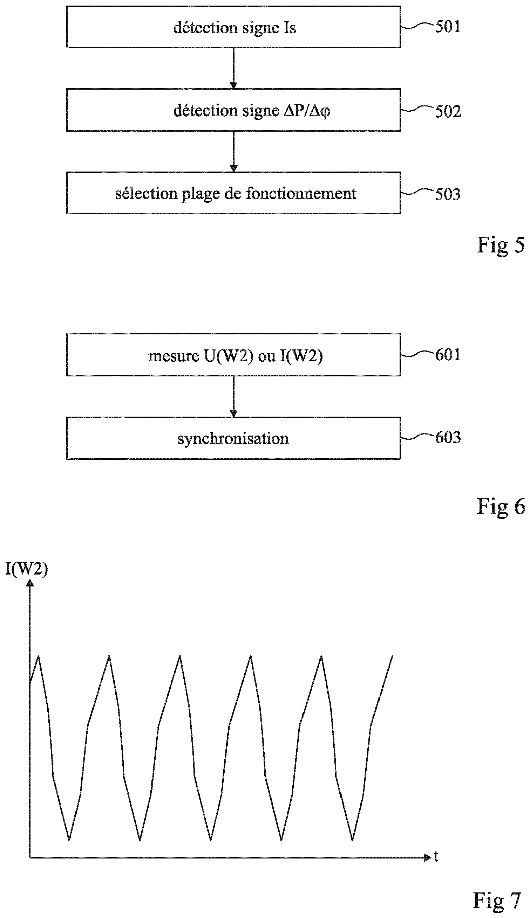

La figure 5 représente, sous forme de blocs, un exemple d'un procédé de sélection de plage de fonctionnement mis en oeuvre par le circuit de contrôle 132 de l'étage secondaire.

En l'absence de synchronisation entre les étages primaire et secondaire, le déphasage initial peut prendre une valeur ϕ=ϕᵢₙᵢₜ quelconque dans la plage [-π ; π] .

Le procédé comprend une étape 501 de mesure du courant de sortie Iₛ du convertisseur. Si le courant Iₛ mesuré est positif, cela signifie que le déphasage ϕ=ϕᵢₙᵢₜ se situe dans la plage [0 ; π] et que le convertisseur réalise un transfert de puissance de l'étage primaire vers l'étage secondaire. Si le courant Iₛ mesuré est négatif, cela signifie que le déphasage ϕ=ϕᵢₙᵢₜ se situe dans la plage [-π ; 0] et que le convertisseur réalise un transfert de puissance de l'étage secondaire vers l'étage primaire.

Lors d'une étape 502 postérieure à l'étape 501, le circuit de contrôle 132 applique une variation locale de phase Δϕ aux signaux de commande du pont secondaire H2. Le déphasage ϕ prend alors une valeur ϕ1=ϕᵢₙᵢₜ+Δϕ. Lors de l'étape 502, le circuit de contrôle 132 mesure en outre la variation de puissance ΔP en sortie du convertisseur, provoquée par l'application de la variation locale de phase Δϕ. Le circuit de contrôle 132 détermine alors le signe du rapport ΔP/Δϕ. Connaissant la courbe de transfert de puissance du convertisseur, par exemple telle qu'illustrée en figure 4, et connaissant le signe du courant Iₛ pour la valeur initiale de déphasage ϕᵢₙᵢₜ, ceci permet de déterminer dans quelle plage de fonctionnement se situe le déphasage ϕ=ϕ1 parmi les plages [-π ; -π/2], [-π/2 ; 0], [0 ; π/2] et [π/2 ; π].

Plus particulièrement, dans l'exemple de la figure 4 :
- si le signe du courant Iₛ déterminé à l'étape 501 est positif et si le signe du rapport ΔP/Δϕ déterminé à l'étape 502 est négatif, cela signifie que le déphasage ϕ=ϕ1 se situe dans la plage [π/2 ; π] ;
- si le signe du courant Iₛ déterminé à l'étape 501 est positif et si le signe du rapport ΔP/Δϕ déterminé à l'étape 502 est positif, cela signifie que le déphasage ϕ=ϕ1 se situe dans la plage [0 ; π/2] ;
- si le signe du courant Iₛ déterminé à l'étape 501 est négatif et si le signe du rapport ΔP/Δϕ déterminé à l'étape 502 est positif, cela signifie que le déphasage ϕ=ϕ1 se situe dans la plage [-π/2 ; 0] ; et
- si le signe du courant Iₛ déterminé à l'étape 501 est négatif et si le signe du rapport ΔP/Δϕ déterminé à l'étape 502 est négatif, cela signifie que le déphasage ϕ=ϕ1 se situe dans la plage [-π ; -π/2].

Lors d'une étape 503 postérieure à l'étape 502, en fonction du signe du courant Iₛ déterminé à l'étape 501 et du signe du rapport ΔP/Δϕ déterminé à l'étape 502, le circuit 132 applique aux signaux de commande du pont secondaire H2 un déphasage fixe prédéterminé permettant de placer le convertisseur dans la plage de fonctionnement désirée.

On suppose ici, à titre d'exemple, que l'on souhaite réaliser un transfert de puissance positif de l'étage primaire vers l'étage secondaire. Pour cela, pour obtenir de bonnes performances de conversion, il convient que le déphasage ϕ soit situé dans la plage [0 ; π/2].

Ainsi, dans cet exemple :
si le signe du courant Iₛ déterminé à l'étape 501 est positif et si le signe du rapport ΔP/Δϕ déterminé à l'étape 502 est négatif, le circuit de contrôle 132 applique aux signaux de commande du pont H2 un déphasage de -π/2. Le déphasage ϕ prend alors une valeur ϕ2 = ϕ1-π/2 ;
- si le signe du courant Iₛ déterminé à l'étape 501 est positif et si le signe du rapport ΔP/Δϕ déterminé à l'étape 502 est positif, le circuit de contrôle 132 n'applique aucun déphasage aux signaux de commande du pont H2 ;
- si le signe du courant Iₛ déterminé à l'étape 501 est négatif et si le signe du rapport ΔP/Δϕ déterminé à l'étape 502 est positif, le circuit de contrôle 132 applique aux signaux de commande du pont H2 un déphasage de π/2. Le déphasage ϕ prend alors une valeur ϕ2 = ϕ1+π/2 ; et
- si le signe du courant Iₛ déterminé à l'étape 501 est négatif et si le signe du rapport ΔP/Δϕ déterminé à l'étape 502 est négatif, le circuit de contrôle 132 applique aux signaux de commande du pont H2 un déphasage de π. Le déphasage ϕ prend alors une valeur ϕ2 = ϕ1+π.

A titre de variante, à l'étape 501, la tension de sortie V_{DC} du convertisseur peut en outre être mesurée. Si, au démarrage du convertisseur, la tension V_{DC} et le courant Iₛ sont nuls, on peut directement en déduire que le déphasage ϕ=ϕᵢₙᵢₜ se situe dans la plage [-π ; 0] . Le circuit de contrôle 132 peut alors directement appliquer un déphasage de π aux signaux de commande du pont H2. Les étapes 502 et 503 peuvent ensuite être mises en oeuvre de façon similaire à ce qui a été décrit ci-dessus. Ceci permet avantageusement de commencer à charger le condensateur de sortie CF dès l'étape 501, sans attendre l'achèvement de l'étape 503.

Plus généralement, si l'on souhaite réaliser un transfert de puissance positif de l'étage primaire vers l'étage secondaire et que, à l'étape 501, le circuit 132 détermine que le déphasage ϕ=ϕᵢₙᵢₜ se situe dans la plage [-π ; 0], le circuit 132 peut directement appliquer un déphasage égal à π aux signaux de commande du pont secondaire H2, avant de mettre en oeuvre les étapes 502 et 503. De façon similaire, si l'on souhaite réaliser un transfert de puissance positif de l'étage secondaire vers l'étage primaire et que, à l'étape 501, le circuit 132 détermine que le déphasage ϕ=ϕᵢₙᵢₜ se situe dans la plage [0 ; π], le circuit 132 peut directement appliquer un déphasage égal à -π aux signaux de commande du pont secondaire H2, puis mettre en oeuvre les étapes 502 et 503.

Par ailleurs, à titre de variante, au lieu de mesurer la variation de puissance ΔP en sortie du convertisseur, provoquée par l'application de la variation locale de phase Δϕ, le circuit de contrôle 132 mesure une variation ΔIs du courant de sortie du convertisseur. Le circuit de contrôle 132 détermine alors le signe du rapport ΔIs/Δϕ. Le procédé est alors mis en oeuvre de façon similaire à ce qui a été décrit ci-dessus, en remplaçant le signe du rapport ΔP/Δϕ par le signe du rapport ΔIs/Δϕ.

Le procédé de sélection de plage de fonctionnement de la figure 5 peut par exemple être réitéré à chaque démarrage du convertisseur, ou à tout autre moment.

Une fois le déphasage ϕ placé dans la bonne plage de fonctionnement, le circuit de contrôle 132 de l'étage secondaire régule la puissance de sortie du convertisseur en jouant sur la phase des signaux de commande du pont secondaire H2 (et donc sur le déphasage ϕ dans la mesure où la phase de signaux de commande du pont primaire H1 reste inchangée). A titre d'exemple, le circuit de contrôle 132 détermine une consigne de phase du pont secondaire H2, qui est issue d'une boucle de régulation sur la tension de sortie V_{DC} du convertisseur. Pour réaliser cette régulation, un simple régulateur de type proportionnelle-intégrale (PI) peut être utilisé.

Pour certaines applications, il convient par ailleurs de commander le convertisseur de façon à assurer une aborption sinusoïdale du courant d'entrée. Pour cela, il convient de synchroniser la commande sur la tension alternative d'entrée V_{AC}.

Dans un premier exemple de réalisation, la gestion de l'absorption sinusoïdale du courant est mise en oeuvre par le circuit de contrôle 112 de l'étage primaire, pour lequel la tension V_{AC} est directement accessible. Le circuit de contrôle 112 fait alors varier le rapport cyclique D1 du pont primaire H1 de façon à assurer une absorption sinusoïdale du courant d'entrée.

Dans un deuxième exemple de réalisation, la gestion de l'absorption sinusoïdale du courant est mise en oeuvre par le circuit de contrôle 132 de l'étage secondaire, pour lequel la tension V_{AC} n'est pas directement accessible.

Dans ce cas, le circuit de contrôle 112 commande le pont primaire selon une commande pleine onde, sans variation du rapport cyclique D1. La tension haute fréquence Vp1 imposée par le pont primaire H1 est alors une tension carrée, avec une modulation d'amplitude basse fréquence par la source alternative d'entrée. Par des mesures de tension et/ou de courant en sortie du transformateur T, le circuit de contrôle 132 de l'étage secondaire détecte des périodes dites mortes, correspondant à des passages de la tension d'entrée V_{AC} sous une valeur seuil, par exemple une tension de l'ordre de 30 volts (en valeur absolue). Ceci permet d'avoir une synchronisation au double de la fréquence de la tension d'entrée V_{AC} (c'est-à-dire à la fréquence de la tension V_{AC} redressée). Le circuit de contrôle 132 fait alors varier le rapport cyclique D2 du pont secondaire H2 de façon à assurer une absorption sinusoïdale du courant d'entrée.

Dans le cas où l'inductance série Lᵣ est placée au secondaire (configuration de la figure 2), une image de la tension Vₚ₁ imposée par le primaire est accessible par le circuit de contrôle 132 aux bornes de l'enroulement secondaire W2 du transformateur. Dans ce cas, la détection des périodes mortes (correspondant aux passages à zéro de la tension d'entrée V_{AC}) par le circuit 132 peut être réalisée uniquement sur la base d'une mesure de la tension de sortie U(W2) du transformateur T.

Dans le cas où l'inductance série Lᵣ est placée au primaire (configuration de la figure 1), la tension Vₚ₁ n'est pas accessible en sortie du transformateur T. Dans ce cas, la détection des périodes mortes par le circuit 132 peut être réalisée par une mesure du courant I(W2) au secondaire du transformateur T.

Dans un convertisseur du type décrit en relation avec les figures 1 et 2, le circuit de commande primaire 112 et le circuit de commande secondaire 132 ont chacun leur propre circuit de génération d'un signal d'horloge et ne partagent aucune référence temporelle. Dans chaque circuit de commande, le signal d'horloge est utilisé pour le cadencement du circuit et pour la génération des signaux de commandes des interrupteurs de l'étage correspondant. Les générateurs d'horloge des circuits 112 et 132 sont par exemple identiques aux dispersions de fabrication près. Toutefois, en pratique, du fait des dispersions de fabrication d'une part, et des dérives en fonctionnement (température, vieillissement) d'autre part, il existe inévitablement un écart de fréquence entre le signal d'horloge du circuit 112 et le signal d'horloge du circuit 132.

Si cet écart est suffisamment faible, il peut être toléré, la dérive étant compensée uniquement par la boucle de régulation de la tension et/ou du courant de sortie du convertisseur.

Dans le cas particulier d'un convertisseur à absorption sinusoïdale de courant, la tolérance sur l'écart de fréquence des signaux d'horloge en l'absence de compensation spécifique est toutefois relativement faible. En pratique, la boucle de régulation de puissance doit de préférence avoir une dynamique au moins dix fois inférieure à la fréquence de la tension alternative d'entrée V_{AC} pour éviter toute distorsion du courant absorbé. Si la boucle de régulation de puissance doit également corriger la différence de fréquence de découpage entre les deux étages (liée à la différence de fréquence d'horloge entre les circuits de commande 112 et 132) sans distorsion du courant absorbé, alors la différence de fréquence de découpage entre les deux étages, aussi appelée fréquence de battement, doit également être de préférence au moins dix fois inférieure à la fréquence de la tension V_{AC}. Si l'on désigne respectivement par Fd1 et Fd2 la fréquence de découpage des étages primaire et secondaire (c'est-à-dire la fréquence de commutation des interrupteurs des ponts H1 et H2) et par Fb=|Fd2-Fd1| la fréquence de battement entre les deux étages, il conviendra de respecter la relation Fb<F_{AC}/10, où F_{AC} désigne la fréquence de la tension alternative d'entrée V_{AC}. Soit Δ, la précision des circuits de génération d'horloge utilisés dans les circuits de commande 112 et 132, la relation entre la fréquence d'horloge Fc1 du circuit 112 et la fréquence d'horloge Fc2 du circuit 132 peut s'exprimer comme suit : Fc2=Fc1+Δ*Fc1. Les fréquences de découpage Fd1 et Fd2 étant générées à partir des fréquences d'horloge Fc1 et Fc2 respectivement, on retrouve la relation Fd2=Fd1+Δ*Fd1, et donc Fb=Δ*Fd1. Pour respecter la relation Fb<F_{AC}/10 énoncée ci-dessus, il convient donc de respecter la relation Δ<F_{AC}/ (10*Fd1) . Ainsi, plus la fréquence de découpage est élevée, plus les circuits de génération d'horloge doivent être précis.

On notera que dans le cas d'un convertisseur de type continu-continu (DC/DC), la fréquence de la tension d'entrée est nulle, ce qui libère un degré de liberté sur la dynamique de la régulation. Dans ce cas, il est possible de compenser une fréquence de battement plus élevée.

Dans certaines applications, la précision des circuits de génération d'horloge peut être insuffisante pour respecter les contraintes énoncées ci-dessus. Dans ce cas, le circuit de contrôle 132 de l'étage secondaire peut être configuré pour mettre en oeuvre un procédé de synchronisation de l'horloge secondaire sur l'horloge primaire.

La figure 6 représente, sous forme de blocs, un exemple d'un procédé de synchronisation mis en oeuvre par le circuit de contrôle 132 de l'étage secondaire.

Le procédé de synchronisation de la figure 6 comprend une phase 601 de mesure, via le circuit 132, d'un signal représentatif de la tension ou du courant de sortie du transformateur T. Pendant toute la durée de la phase de mesure 601, l'enroulement secondaire W2 du transformateur est court-circuité par l'intermédiaire des interrupteurs du pont secondaire H2. A titre d'exemple, pendant toute la durée de la phase de mesure 601, les interrupteurs S₂₁ et S₂₂ sont maintenus fermés et les interrupteurs S₂₃ et S₂₄ sont maintenus ouverts. A titre de variante, pendant toute la durée de la phase de mesure 601, les interrupteurs S₂₃ et S₂₄ sont maintenus fermés et les interrupteurs S₂₁ et S₂₂ sont maintenus ouverts. Les interrupteurs du pont H1 sont quant à eux commandés en commutation, à la fréquence de découpage du convertisseur.

Lors d'une étape 603, le circuit 132 détecte, à partir du signal mesuré à l'étape 601, la séquence de commande des interrupteurs du pont primaire H1. Le circuit 132 peut alors synchroniser les signaux de commande des interrupteurs du pont secondaire H2 par rapport à la séquence de commande du pont primaire H1.

Plus particulièrement, dans le cas où l'inductance série Lᵣ du convertisseur est placée coté étage secondaire (configuration de la figure 2), le signal mesuré à l'étape 601 peut être directement la tension U(W2) aux bornes de l'enroulement secondaire W2. En effet, dans cette configuration, la tension U(W2) est une image de la tension modulée Vp1 fournie par le pont primaire H1, par exemple telle qu'illustrée sur la figure 3, au rapport de transformation du transformateur T près. Le circuit 132 peut comporter un détecteur de fronts permettant de générer un signal d'horloge à partir de la tension U(W2). Ce signal d'horloge est alors utilisé à l'étape 603 pour synchroniser la commande du pont secondaire H2 par rapport à la commande du pont primaire H1.

Dans le cas où l'inductance série Lᵣ du convertisseur est placée coté étage primaire (configuration de la figure 1), le signal mesuré à l'étape 601 peut être le courant I(W2) dans l'enroulement secondaire W2 du transformateur T. En effet, dans cette configuration, une image de la tension Vₚ₁ n'est pas directement accessible côté étage secondaire. Le courant I(W2) est alors de forme trapézoïdale, les passages par zéro du courant I(W2) correspondant aux instants 0 et *π* référencés par rapport au primaire. Le circuit 132 peut détecter les passages à zéro du courant I(W2) et générer un signal d'horloge à partir de cette détection. Ce signal d'horloge est utilisé à l'étape 603 pour synchroniser la commande du pont secondaire H2 par rapport à la commande du pont primaire H1.

Le procédé de synchronisation de la figure 6 peut par exemple être réitéré périodiquement, à une fréquence prédéterminée fonction de la précision des circuits de génération des signaux d'horloge des circuits 112 et 132. A titre de variante, le procédé de la figure 6 peut être mis en oeuvre à la demande, à tout moment souhaité.

Un avantage du procédé de synchronisation décrit ci-dessus résulte du fait que les deux extrémités de l'enroulement secondaire W2 du transformateur sont court-circuitées (directement dans la configuration de la figure 1 et par l'intermédiaire de l'inductance Lr dans la configuration de la figure 2) pendant toute la durée de la phase 601 de mesure du signal représentatif de la séquence de commande de l'étage primaire. Il en résulte que le signal mesuré n'est pas impacté par les inductances parasites, capacités parasites et/ou résistances parasites de l'étage secondaire. Ceci permet de mettre en oeuvre une détection très précise de la séquence de commande de l'étage primaire.

La figure 7 est un diagramme représentant, à titre d'exemple illustratif, l'évolution, en fonction du temps t (en abscisse), du courant I(W2) dans l'enroulement secondaire W2 du transformateur T dans le cas d'une commande à quatre phases telle que décrite en relation avec la figure 3.

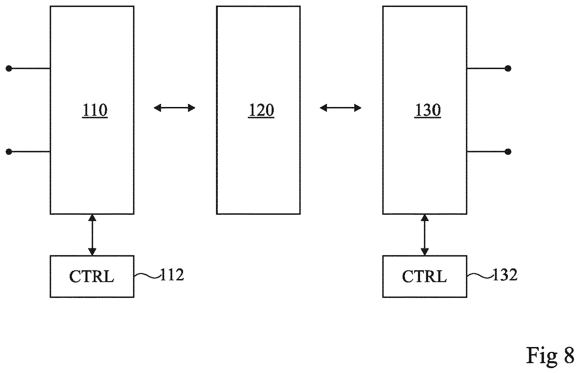

La figure 8 est un schéma bloc simplifié représentant de façon plus générale un exemple d'un convertisseur à commande de phase selon un mode de réalisation.

Dans les exemples décrits en relation avec les figures 1 à 7, le convertisseur est un convertisseur AC/DC à conversion directe. Plus généralement, l'homme du métier saura adapter les modes de réalisation décrits à tout type de convertisseur à découpage à commande de phase.

Dans l'exemple de la figure 8, l'étage primaire 110 comporte au moins un interrupteur de découpage (non détaillé sur la figure) et est destiné à être connecté en entrée à une source de tension alternative, à une source de courant alternatif, à une source de tension continue ou à une source de courant continu.

L'étage secondaire 130 comporte au moins un interrupteur de découpage (non détaillé sur la figure) et est destiné à fournir une tension alternative, un courant alternatif, une tension continue, ou un courant continu.

L'étage d'isolation 120 peut comporter un transformateur, ou tout autre élément adapté à assurer la transmission de la puissance électrique modulée entre le primaire et le secondaire avec isolation, galvanique ou non, entre l'étage primaire et l'étage secondaire. A titre d'exemple, l'étage d'isolation 120 est constitué par deux condensateurs de liaison assurant une isolation statique.

Le convertisseur peut être unidirectionnel, c'est-à-dire adapté à transférer de l'énergie du primaire vers le secondaire uniquement, ou bidirectionnel, c'est-à-dire adapté à transférer de l'énergie, au choix, du primaire vers le secondaire ou du secondaire vers le primaire.

Les modes de réalisation décrits permettent avantageusement de simplifier la réalisation des circuits de contrôle des étages primaire et secondaire en supprimant toute liaison directe entre les éléments de contrôle de l'étage primaire et les éléments de contrôle de l'étage secondaire.

Les modes de réalisation décrits sont tout particulièrement avantageux pour des applications de transmission d'énergie sans fil dans lesquelles les étages primaire et secondaire sont totalement séparés physiquement. Les modes de réalisation décrits peuvent toutefois avoir de nombreuses autres applications, par exemple dans le domaine des alimentations, par exemple les alimentations de type USB Power Delivery (alimentations par liaison USB) qui nécessitent une conversion AC/DC isolée avec absorption sinusoïdale du courant d'entrée.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, les modes de réalisation décrits ne se limitent pas aux exemples d'application décrits ci-dessus. On notera par ailleurs que selon l'application considérée, le circuit de contrôle 132 de l'étage secondaire peut être configuré pour mettre en oeuvre le procédé de synchronisation de la figure 6 et ne pas mettre en oeuvre le procédé de sélection de plage de fonctionnement de la figure 5, ou encore pour mettre en oeuvre le procédé de sélection de plage de fonctionnement de la figure 5 et le procédé de synchronisation de la figure 6.

## Revendications

1. Convertisseur de puissance comportant :
un étage primaire (110) comportant quatre premiers interrupteurs de découpage (S₁₁, S₁₂, S₁₃, S₁₄) formant un premier pont en H (H1) ;
un circuit de contrôle (112) adapté à appliquer un premier signal de commande audit premier pont en H (H1) ;
un étage secondaire (130) comportant quatre deuxièmes interrupteurs de découpage (S₂₁, S₂₂, S₂₃, S₂₄) formant un deuxième pont en H (H2) ;
un circuit de contrôle (132) adapté à appliquer un deuxième signal de commande audit deuxième pont en H (H2) ; et
un étage de transmission de puissance (120) reliant l'étage primaire (110) à l'étage secondaire (130), l'étage de transmission de puissance (120) comprenant un transformateur (T) comportant un enroulement primaire (W1) et un enroulement secondaire (W2),
dans lequel :
a) l'étage primaire (110) comprend une inductance (Lr) en série avec l'enroulement primaire (W1) du transformateur (T) qui sont reliés entre des premier (C) et deuxième (D) nœuds de sortie du premier pont en H (H1) ; ou
b) l'étage secondaire (130) comprend une inductance (Lr) en série avec l'enroulement secondaire (W2) du transformateur (T) qui sont reliés entre des premier (I) et deuxième (J) nœuds d'entrée du deuxième pont en H (H2) ;
et dans lequel :
- le circuit de contrôle (132) de l'étage secondaire est isolé électriquement du circuit de contrôle (112) de l'étage primaire ;
- le circuit de contrôle (132) de l'étage secondaire est configuré pour, lors d'une phase de synchronisation, à partir, dans l'alternative a), d'une mesure d'un courant (I(W2)) dans l'enroulement secondaire (W2), et, dans l'alternative b), d'une mesure d'une tension (U(W2)) aux bornes de l'enroulement secondaire (W2), générer un troisième signal représentatif du premier signal de commande appliqué audit premier pont en H (H1) ;et
- le circuit de contrôle (132) de l'étage secondaire est configuré pour, lors de la phase de synchronisation, commander ledit deuxième pont en H (H2) de façon à court-circuiter les premier (I) et deuxième (J) nœuds d'entrée du deuxième pont en H (H2).

2. Convertisseur selon la revendication 1, dans lequel le circuit de contrôle (132) de l'étage secondaire (130) est en outre configuré pour, à l'issue de la phase de synchronisation, synchroniser le deuxième signal de commande dudit deuxième pont en H (H2) par rapport au troisième signal, de façon à synchroniser la commande dudit deuxième pont en H (H2) sur celle dudit premier pont en H (H1) .

3. Convertisseur selon la revendication 2, dans lequel le circuit de contrôle (132) de l'étage secondaire (130) est configuré pour réitérer la phase de synchronisation de façon périodique.

4. Convertisseur selon l'une quelconque des revendications 1 à 3, dans lequel le circuit de contrôle (132) de l'étage secondaire est en outre configuré pour, lors d'une phase de sélection de plage de fonctionnement, déterminer, à partir d'une mesure d'un courant (I(W2)) et/ou d'une tension (U(W2)) dans l'étage secondaire (130), dans quelle plage de fonctionnement se situe un déphasage ϕ entre le premier signal de commande dudit au moins un premier interrupteur et le deuxième signal de commande dudit au moins un deuxième interrupteur.

5. Convertisseur selon la revendication 4, dans lequel le circuit de contrôle (132) de l'étage secondaire est en outre configuré pour, lors de la phase de sélection de plage de fonctionnement, modifier la phase du deuxième signal de commande dudit deuxième pont en H (H2) de façon à placer le déphasage ϕ dans une plage de fonctionnement souhaitée.

6. Convertisseur selon l'une quelconque des revendications 1 à 5, dans lequel le circuit de contrôle (112) de l'étage primaire est configuré pour mesurer un signal alternatif d'entrée du convertisseur, et adapter en conséquence un rapport cyclique entre des signaux de commande de premier et deuxième bras du premier pont en H (H1) de façon à assurer une absorption sinusoïdale du courant d'entrée du convertisseur.

7. Convertisseur selon l'une quelconque des revendications 1 à 5, dans lequel le circuit de contrôle (132) de l'étage secondaire est configuré pour, à partir d'une mesure d'un courant (I(W2)) ou d'une tension (U(W2)) dans l'étage secondaire (130), déterminer l'évolution d'un signal alternatif d'entrée du convertisseur, et adapter en conséquence un rapport cyclique entre des signaux de commande de premier et deuxième bras du deuxième pont en H (H2) de façon à assurer une absorption sinusoïdale du courant d'entrée du convertisseur.

8. Convertisseur selon l'une quelconque des revendications 1 à 7, dans lequel le circuit de contrôle (112) de l'étage primaire et le circuit de contrôle (132) de l'étage secondaire sont adaptés à commander lesdits premiers interrupteurs (S₁₁, S₁₂, S₁₃, S₁₄) et lesdits deuxièmes interrupteurs (S₂₁, S₂₂, S₂₃, S₂₄) en commutation à une fréquence comprise entre 10 kHz et 10 MHz.

## Patentansprüche

1. Ein Leistungswandler, der Folgendes aufweist:
eine Primärstufe (110), aufweisend vier erste Trennschalter (S₁₁, S₁₂, S₁₃, S₁₄), die eine erste H-Brücke (H1) bilden
eine Steuerschaltung (112), die in der Lage ist, ein erstes Steuersignal an die erste H-Brücke (H1) anzulegen;
eine Sekundärstufe (130) aufweisend vier zweite Trennschalter (S₂₁, S₂₂, S₂₃, S₂₄), die eine zweite H-Brücke (H2) bilden
eine Steuerschaltung (132), die in der Lage ist, ein zweites Steuersignal an die zweite H-Brücke (H2) anzulegen; und
eine Leistungsübertragungsstufe (120), die die Primärstufe (110) mit der Sekundärstufe (130) koppelt, wobei die Leistungsübertragungsstufe (120) einen Transformator (T) mit einer Primärwicklung (W1) und einer Sekundärwicklung (W2) aufweist
wobei:
a) die Primärstufe (110) eine Induktivität (Lᵣ) in Reihe mit der Primärwicklung (W1) des Transformators (T) aufweist, die zwischen ersten (C) und zweiten (D) Ausgangsknoten der ersten H-Brücke (H1) gekoppelt sind, oder
b) die Sekundärstufe (130) eine Induktivität (Lᵣ) in Reihe mit der Sekundärwicklung (W2) des Transformators (T) aufweist, die zwischen ersten (I) und zweiten (J) Eingangsknoten der zweiten H-Brücke (H2) gekoppelt sind,
und wobei:
- der Steuerschaltung (132) der Sekundärstufe von dem Steuerkreis (112) der Primärstufe elektrisch getrennt ist;
- die Steuerschaltung (132) der Sekundärstufe so konfiguriert ist, dass sie während einer Synchronisationsphase bei der Alternative a basierend auf einer Messung eines Stroms (I(W2)) in der Sekundärwicklung (W2), und bei der Alternative b basierend auf einer Messung einer Spannung (U(W2)) über der Sekundärwicklung (W2) ein drittes Signal erzeugt, das für das an die erste H-Brücke (H1) angelegte erste Steuersignal repräsentativ ist; und
- die Steuerschaltung (132) der Sekundärstufe so konfiguriert ist, dass sie während der Synchronisierungsphase die zweite H-Brücke (H2) so steuert, dass der erste (I) und der zweite (J) Eingangsknoten der zweiten H-Brücke (H2) kurzgeschlossen werden.

2. Wandler nach Anspruch 1, wobei die Steuerschaltung (132) der Sekundärstufe (130) ferner so konfiguriert ist, dass sie am Ende der Synchronisationsphase das zweite Signal zum Steuern der zweiten H-Brücke (H2) bezüglich des dritten Signals synchronisiert, um die Steuerung der zweiten H-Brücke (H2) mit der der ersten H-Brücke (H1) zu synchronisieren.

3. Wandler nach Anspruch 2, wobei die Steuerschaltung (132) der Sekundärstufe (130) konfiguriert ist zum periodischen Wiederholen der Synchronisationsphase.

4. Wandler nach einem der Ansprüche 1 bis 3, wobei die Steuerschaltung (132) der Sekundärstufe ferner konfiguriert ist, um während einer Betriebsbereichsauswahlphase basierend auf einer Messung eines Stroms (I(W2)) und/oder einer Spannung (U(W2)) in der Sekundärstufe (130) zu bestimmen, in welchem Betriebsbereich eine Phasenverschiebung ϕ zwischen dem ersten Signal zur Steuerung des wenigstens einen ersten Schalters und dem zweiten Signal zur Steuerung des wenigstens einen zweiten Schalters liegt.

5. Wandler nach Anspruch 4, wobei die Steuerschaltung (132) der Sekundärstufe ferner so konfiguriert ist, dass sie während der Betriebsbereichsauswahlphase die Phase des zweiten Steuersignals der zweiten H-Brücke (H2) modifiziert, um die Phasenverschiebung ϕ in einen gewünschten Betriebsbereich zu legen.

6. Wandler nach einem der Ansprüche 1 bis 5, wobei die Steuerschaltung (112) der Primärstufe konfiguriert ist zum Messen eines Wechselstrom-Eingangssignals des Wandlers und dementsprechend ein Tastverhältnis zwischen Signalen zur Steuerung des ersten und des zweiten Arms der ersten H-Brücke (H1) anpasst, um eine sinusförmige Aufnahme des Eingangsstroms des Wandlers zu gewährleisten.

7. Wandler nach einem der Ansprüche 1 bis 5, wobei die Steuerschaltung (132) der Sekundärstufe so konfiguriert ist, dass sie auf der Basis einer Messung eines Stroms (I(W2)) oder einer Spannung (U(W2)) in der Sekundärstufe (130) die Änderung eines Wechselstrom-Eingangssignals des Wandlers bestimmt und dementsprechend ein Tastverhältnis zwischen Signalen zur Steuerung des ersten und des zweiten Arms der zweiten H-Brücke (H2) anpasst, um eine sinusförmige Aufnahme des Eingangsstroms des Wandlers gewährleisten.

8. Wandler nach einem der Ansprüche 1 bis 7, wobei die Steuerschaltung (112) der Primärstufe und die Steuerschaltung (132) der Sekundärstufe in der Lage sind, die ersten Schalter (S₁₁, S₁₂, S₁₃, S₁₄) und die zweiten Schalter (S₂₁, S₂₂, S₂₃, S₂₄) im Schaltbetrieb mit einer Frequenz im Bereich von 10 kHZ bis 10 MHz zu steuern.

## Claims

1. A power converter comprising:
a primary stage (110) comprising four first cut-off switches (S₁₁, S₁₂, S₁₃, S₁₄) forming a first H bridge (H1);
a control circuit (112) capable of applying a first control signal to said first H bridge (H1);
a secondary stage (130) comprising four second cut-off switches (S₂₁, S₂₂, S₂₃, S₂₄) forming a second H bridge (H2) ;
a control circuit (132) capable of applying a second control signal to said second H bridge (H2); and
a power transmission stage (120) coupling the primary stage (110) to the secondary stage (130), the power transmission stage (120) comprising a transformer (T) comprising a primary winding (W1) and a secondary winding (W2) ,
wherein:
a) the primary stage (110) comprises an inductance (Lᵣ) in series with the primary winding (W1) of the transformer (T) that are coupled between first (C) and second (D) output nodes of the first H bridge (H1), or
b) the secondary stage (130) comprises an inductance (Lᵣ) in series with the secondary winding (W2) of the transformer (T) that are coupled between first (I) and second (J) input nodes of the second H bridge (H2),
and wherein:
- the control circuit (132) of the secondary stage is electrically isolated from the control circuit (112) of the primary stage;
- the control circuit (132) of the secondary stage is configured to, during a synchronization phase, based, in the alternative a), on a measurement of a current (I(W2)) in the secondary winding (W2), and, in the alternative b) , on a measurement of a voltage (U(W2)) across the secondary winding (W2), generate a third signal representative of the first control signal applied to said first H bridge (H1); and
- the control circuit (132) of the secondary stage is configured to, during the synchronization phase, control said second H bridge (H2) to short-cut the first (I) and second (J) input nodes of the second H bridge (H2).

2. The converter according to claim 1, wherein the control circuit (132) of the secondary stage (130) is further configured to, at the end of the synchronization phase, synchronize the second signal of controlling said second H bridge (H2) with respect to the third signal, to synchronize the control of said second H bridge (H2) on that of said first H bridge (H1).

3. The converter according to claim 2, wherein the control circuit (132) of the secondary stage (130) is configured to periodically repeat the synchronization phase.

4. The converter according to any of claims 1 to 3, wherein the control circuit (132) of the secondary stage is further configured to, during an operating range selection phase, determine, based on a measurement of a current (I(W2)) and/or of a voltage (U(W2)) in the secondary stage (130), in which operating range a phase shift ϕ between the first signal for controlling said at least one first switch and the second signal for controlling said at least one second switch is located.

5. The converter according to claim 4, wherein the control circuit (132) of the secondary stage is further configured to, during the operating range selection phase, modify the phase of the second control signal of said second H bridge (H2) to place phase shift ϕ in a desired operating range.

6. The converter according to any of claims 1 to 5, wherein the control circuit (112) of the primary stage is configured to measure an AC input signal of the converter, and accordingly adapt a duty cycle between signals for controlling first and second arms of the first H bridge (H1) to ensure a sinusoidal absorption of the input current of the converter.

7. The converter according to any of claims 1 to5, wherein the control circuit (132) of the secondary stage is configured to, based on a measurement of a current (I(W2)) or of a voltage (U(W2)) in the secondary stage (130), determine the variation of an AC input signal of the converter, and accordingly adapt a duty cycle between signals for controlling first and second arms of the second H bridge (H2) to ensure a sinusoidal absorption of the input current of the converter.

8. The converter according to any of claims 1 to 7, wherein the control circuit (112) of the primary stage and the control circuit (132) of the secondary stage are capable of controlling said first switches (S₁₁, S₁₂, S₁₃, S₁₄) and said second switches (S₂₁, S₂₂, S₂₃, S₂₄) in switched mode at a frequency in the range from 10 kHZ to 10 MHz.
